# EUROPÄISCHE PATENTANMELDUNG

(11) **EP 3 992 519 A1**
(43) Veröffentlichungstag der Anmeldung: **04.05.2022**
(21) Anmeldenummer: 20020499.8
(22) Anmeldetag: 29.10.2020
(51) Int. Cl.: F17C 5/02

(54) **VERFAHREN UND VORRICHTUNG ZUR VERSORGUNG MIT EINEM KRYOGENEN GAS WIE WASSERSTOFF**

(71) Anmelder: Linde Kryotechnik AG, 8422 Pfungen (CH)
(72) Erfinder: Decker, Lutz, CH-8400 Winterthur (CH)
(74) Vertreter: Lu, Jing

(57) **Zusammenfassung**

Die Erfindung betrifft ein Verfahren sowie eine Vorrichtung zur Versorgung mit kryogenem Gas, insbesondere Wasserstoff, wobei dieser Wasserstoff in einen Tank (110) gefüllt wird, wobei zum Befüllen des Tanks zunächst flüssiger Wasserstoff bei einem ersten Befüllungsdruck bis zum Erreichen eines ersten Füllstandes (112) in den Tank geleitet wird, und wobei nach Erreichen des ersten Füllstandes gasförmiger Wasserstoff bei einem zweiten Befüllungsdruck, der mindestens gleich dem kritischen Druck von Wasserstoff ist, in den Tank geleitet wird, bis der Druck im Tank den kritischen Druck von Wasserstoff erreicht oder überschreitet.

## Beschreibung

### Technisches Gebiet

Die vorliegende Erfindung betrifft ein Verfahren, eine Verwendung dieses Verfahrens und eine Vorrichtung zur Versorgung mit kryogenen Gasen, insbesondere Wasserstoff oder Methan, bei dem das kryogene Gas in einen Tank gefüllt wird, wobei das kryogene Gas anschließend insbesondere als Treibstoff beispielsweise für Brennstoffzellen zur Verfügung steht. Bei dem Tank handelt es sich insbesondere um einen Treibstofftank insbesondere auf einem Schiff, insbesondere für den Antrieb des Schiffes oder allgemein eines Fahrzeugs mittels Brennstoffzellen.

### Stand der Technik

Flüssigwasserstoff wird bisher primär zur lokalen Speicherung oder zum Transport in kryogene Tanks gefüllt. Bei diesen Anwendungen bleibt der Wasserstoff üblicherweise hermetisch von der Umwelt getrennt. Einzig zum Umfüllen wird ein solches System "geöffnet", befindet sich dann aber immer in einem örtlich stationären Zustand.

Als neue Anwendung soll Wasserstoff als Treibstoff für brennstoffzellenbetriebene Fahrzeuge wie Schiffe zum Einsatz kommen. Aufgrund des hohen Treibstoffbedarfs beispielsweise von Schiffen soll der Wasserstoff inbesondere in verflüssigter Form in Speichertanks mitgeführt werden. Der Wasserstoff muss der Brennstoffzelle dabei kontinuierlich bei einem definierten erhöhten Druck, typischerweise 3 bara, zur Verfügung gestellt werden. Dies geschieht nach dem Stand der Technik durch einen Anwärmer, in dem ein geringer Teil des Wasserstoffs gegen Umgebungsluft angewärmt bzw. verdampft wird. Durch die resultierende Dichteänderung steigt der Druck im Tanksystem an.

Insbesondere zwei Probleme treten bei dieser Technologie auf: Je höher der Druck im Flüssigspeicher, desto niedriger die Dichte, da die Dichte der Flüssigkeit bei Zunahme des Drucks in Richtung kritischer Druck abnimmt. Mit anderen Worten: Die Speicherkapazität des Tanks nimmt mit dem benötigten Betriebsdruck ab. Zum anderen wird bei Wellengang oder anderen starken Bewegungen der Tankinhalt unregelmäßig durchmischt. Während bei ruhigerem Seegang oder ruhigerer Fahrt sich eine Temperaturschichtung im Gasbereich des Tanks ausbildet, tritt bei unruhigerem Seegang oder unruhigerer Fahrt, beispielsweise beim Verlassen des sicheren Hafens in Richtung Hochsee, eine Durchmischung dieser Temperaturschichtung im Gasbereich mit dem Flüssigwasserstoff ein. Dies führt zu einer schlagartigen Rückkühlung der Gasphase mit resultierendem Zusammenbruch des Tankdrucks ("Sloshing"). Infolge dessen kann die Brennstoffzelle nicht mehr mit Treibstoff versorgt werden.

### Kurzfassung der Erfindung

Angesichts der oben genannten Probleme und Nachteile im Stand der Technik bei der Versorgung mit Wasserstoff und anderen kryogenen Gasen soll die vorliegende Erfindung die Versorgung mit kryogenen Gasen wie Wasserstoff, inbesondere bei der Verwendung als Treibstoff, inbesondere für Brennstoffzellen, verbessern, insbesondere soll die Speicherkapazität des Tanks erhöht und/oder die oben geschilderte Gefahr eines Zusammenbruchs des Tankdrucks verringert werden.

Die Erfindung schlägt hierzu ein Verfahren, eine Verwendung dieses Verfahrens und eine Vorrichtung gemäß den unabhängigen Patentansprüchen vor. Vorteilhafte Ausgestaltungen ergeben sich aus den jeweiligen Unteransprüchen und der nachfolgenden Beschreibung.

### Erläuterung der Erfindung

Im Folgenden wird die vorliegende Erfindung, soweit nicht anders erläutert, ohne Beschränkung der Allgemeinheit auf die Verwendung von Wasserstoff als kryogenes Gas bezogen. Daneben ist beispielsweise insbesondere auch an Methan (kritischer Druck bei etwa 46 bar) oder evtl. auch an Sauerstoff (kritischer Druck von etwa 50 bar) zu denken, ohne etwaige andere kryogene Gase auszuschließen.

Erfindungsgemäß wird demnach ein Verfahren zur Versorgung insbesondere mit Wasserstoff vorgeschlagen, bei dem Wasserstoff in einen Tank gefüllt wird, wobei zum Befüllen des Tanks zunächst flüssiger Wasserstoff bei einem ersten Befüllungsdruck bis zum Erreichen eines ersten Füllstandes in den Tank geleitet wird, und wobei nach Erreichen dieses ersten Füllstandes gasförmiger Wasserstoff unter einem zweiten Befüllungsdruck, der mindestens gleich dem kritischen Druck von Wasserstoff ist, in den Tank geleitet wird, bis der Druck im Tank den kritischen Druck von Wasserstoff erreicht oder überschreitet. Der kritische Druck von Wasserstoff liegt hierbei bei etwa 13 bar.

Bei vorliegender Erfindung wird folglich der Tank zunächst konventionell bei möglichst niedrigem Druck befüllt. Hierbei wird folglich bis zum Erreichen des ersten Füllstandes flüssiger Wasserstoff vorzugsweise bei einem Druck von 1 bis 3 bar, insbesondere bei etwa 1,5 bar, in den Tank geleitet. Damit werden eine maximale Dichte und damit auch eine maximale Beladung des Tanks erreicht. Sobald der Tank seinen maximalen Füllstand erreicht hat, der vorzugsweise dem ersten Füllstand entspricht, wird das Tankinnere derart mit kaltem gasförmigen Wasserstoff druckbeaufschlagt, bis der Tankdruck über dem kritischen Druck von Wasserstoff liegt. Da die Druckbeaufschlagung mit kaltem Gas, inbesondere bei Temperaturen im Bereich von 30 bis 50 K, insbesondere etwa 38 K, und somit nicht durch einen Wärmeeintrag erfolgt, ist dieser Vorgang quasi isenthalp. Der Flüssigwasserstoff "unterkühlt" und nimmt in der Dichte sogar noch leicht zu, bis der gesamte Tankinhalt als unterkühlte Flüssigkeit bei überkritischem Druck und gleichmäßig hoher Dichte vorliegt und keinen Phasenübergang mehr zeigt. "Unterkühlen" bedeutet in diesem Zusammenhang ein Absinken der Temperatur unterhalb der Verflüssigungstemperatur, so dass ein Temperaturanstieg in der Flüssigkeit nicht unmittelbar zu einem Phasenübergang führt.

Somit kann erfindungsgemäß die Speicherkapazität des Tanks erhöht werden. Außerdem kann die Gefahr eines Zusammenbruchs des Tankdrucks aufgrund einer Durchmischung des Gasbereichs mit dem Flüssigwasserstoffbereich beseitigt werden, da im Tank gleichförmig eine überkritische Wasserstoffphase vorliegt. Somit ist auch die kontinuierliche Versorgung von Wasserstoff als Treibstoff, insbesondere zum Betrieb von Brennstoffzellen, insbesondere bei Schiffen auf hoher See, sichergestellt. Es sei ausdrücklich darauf hingewiesen, dass sich die Erfindung auch bei anderen Fahrzeugen als Schiffen anwenden lässt, wie beispielsweise bei Lastwägen, Lokomotiven etc.

Wie bereits erwähnt, findet der erste Befüllungsvorgang durch Einleiten von flüssigem Wasserstoff bei einem Druck von vorzugsweise 1 bis 3, weiter vorzugsweise von 1,5 bar, statt, wobei die Temperatur des flüssigen Wasserstoffs vorzugsweise bei 20 bis 25 K liegt.

In einer weiteren vorteilhaften Ausgestaltung wird bei dem zweiten Befüllungsvorgang gasförmiger Wasserstoff mit überkritischem Druck in den Tank geleitet. Die Bedruckungsquelle hat dabei vorzugsweise einen Druck von 15 bis 20 bar, vorzugsweise etwa 18 bar, und eine Temperatur von 30 bis 50 K, vorzugsweise 35 bis 40 K, vorzugsweise etwa 38 K.

Der gasförmige Wasserstoff kann vorteilhafterweise in den verbliebenen Totraum nach Erreichen des ersten Füllstandes geleitet werden. Die Zufuhr von gasförmigem Wasserstoff in der zweiten Befüllungsphase kann über dieselbe Leitung wie die Zuleitung von flüssigem Wasserstoff in der ersten Befüllungsphase erfolgen. Nach Befüllung liegt der Speicherbetriebsdruck des Tanks vorzugsweise zwischen 13 und 20, 13 bis 18, 13 bis 16 oder insbesondere 15 bar. Über einen konventionellen Anwärmer oder eine Heizung kann dieser Druck kontinuierlich auf einem gewählten Speicherbetriebsdruck von beispielsweise 15 bar gehalten werden. Hierzu wird Wasserstoff aus dem Tank entnommen, über einen Anwärmer oder eine Heizung geführt und als gasförmiger Wasserstoff unterhalb Umgebungstemperatur (bspw. bei 200 - 300 K) dem Tank wieder zugeführt. Der Druckanstieg wird also primär durch Volumeneintrag erreicht. Das Risiko von Sloshing steigt damit über die Zeit wieder an.

Um das Risiko von Sloshing weiterhin zu unterbinden, wird alternativ oder zusätzlich der rückgeführte Strom abgekühlt, d.h. auf vorzugsweise 30 K bis 50 K temperiert, indem vorzugsweise mittels einer Temperaturregelung zumindest ein Teilstrom des rückgeführten Stroms nach dem Anwärmer durch das Innere des Tanks wärmetauschend geführt wird (Verdampfung, d.h. isothermer Wärmeeintrag). Weiterhin kann alternativ oder zusätzlich "Warmgas" aus dem Anwärmer in den Tank über eine entsprechend ausgebildete Leitung eingedüst bzw. eingespritzt bzw. "eingesprudelt" werden, also unter Bildung einer Versprudelung eingeblasen bzw. eingedüst werden. Auch eine Kombination von zwei oder allen drei geschilderten Arten der Druckbeaufschlagung kann sinnvoll sein. Damit wird sichergestellt, dass die Temperatur und Dichte dem Tankinhalt angeglichen werden.

Zur Versorgung von Brennstoffzellen wird Wasserstoff aus dem Tank entnommen, wobei der Druck durch Druckminderung auf einen Brennstoffzellen-Betriebsdruck von typischerweise 3 bis 5 bar reduziert wird. Bei höherem Druck kann die Brennstoffzelle ihre Leistung voll ausnutzen. Bei niedrigerem Druck steigt der Druckverlust bzw. sinkt der Wasserstoffdurchsatz und damit die erreichbare Leistung. Für höhere Drücke als Betriebsdruck sind die Brennstoffzellen in der Regel nicht ausgelegt, die Zellen könnten Schaden nehmen.

In einem weiteren Aspekt betrifft die Erfindung die Verwendung des vorstehend erläuterten erfindungsgemäßen Verfahrens zur Versorgung mit Wasserstoff, wobei der Tank als Treibstofftank verwendet wird und wobei insbesondere Brennstoffzellen mit dem Wasserstoff versorgt werden. Hierbei wird insbesondere der Treibstofftank auf einem Schiff transportiert und die Brennstoffzellen zum Antrieb des Schiffes eingesetzt.

Schließlich betrifft die vorliegende Erfindung eine Vorrichtung umfassend einen Wasserstofftank und mindestens eine Zuleitung zur Zufuhr von flüssigem und gasförmigem Wasserstoff in den Tank zur Durchführung eines erfindungsgemäßen Verfahrens.

Der Tank ist hierbei insbesondere ein Treibstofftank. Während zum Transport von Wasserstoff im Allgemeinen Tanks verwendet werden können, die für niedrigere Drücke ausgelegt sind, muss beim Einsatz des Tanks als Treibstofftank gemäß vorliegender Verwendung der Tank für höhere Drücke ausgelegt sein. Weitere Ausgestaltungen und Vorteile der erfindungsgemäßen Verwendung sowie der erfindungsgemäßen Vorrichtung ergeben sich in analoger Weise aus den oben ausführlich beschriebenen Ausgestaltungen des erfindungsgemäßen Verfahrens. Einzelne Merkmale der Erfindung können auch in anderer Weise als in der hier jeweils dargestellten Kombination miteinander kombiniert werden, soweit die Erfindung, wie sie in den unabhängigen Patentansprüchen definiert ist, nicht verlassen wird.

### Kurzbeschreibung der Figur

Die Figur zeigt eine schematische Übersicht über eine Ausführungsform der erfindungsgemäßen Vorrichtung zur Erläuterung des erfindungsgemäßen Verfahrens zur Versorgung mit Wasserstoff.

### Ausführungsbeispiel

Die einzige Figur zeigt eine Ausführungsform einer Vorrichtung zur Versorgung mit Wasserstoff. Die Vorrichtung ist insgesamt mit 100 gekennzeichnet. Die Vorrichtung 100 steht mit einer Coldbox 200 oder einem anderen Vorratstank zur Versorgung mit Wasserstoff in Verbindung. Die Vorrichtung 100 umfasst im Wesentlichen die folgenden Komponenten: Einen Tank 110, insbesondere einen Treibstofftank, der auf einem Fahrzeug 140, wie einem Schiff, installiert ist. Mit dem im Tank 110 bevorrateten Wasserstoff sollen Brennstoffzellen 150 auf dem Schiff 140 zum Antrieb desselben versorgt werden. Im Tank 110 befindet sich Flüssigwassertoff 114 bei einem beispielhaft gezeigten Füllstand 112. Die dargestellte Situation entspricht einem Zustand während der ersten Befüllungsphase gemäß Erfindung.

Bei dieser ersten Befüllungsphase wird flüssiger Wasserstoff bei einem niedrigen Druck von etwa 1,5 bar bei einer Temperatur von 20 bis 25 K aus einer Coldbox 200 über die Zuleitung 120 und das Steuerventil 122 in den Tank 110 geleitet. Sobald der Tank seinen maximalen Füllstand erreicht hat, wird das Tankinnere, vorzugsweise durch dieselbe Zuleitung 120, mit kaltem gasförmigen Wasserstoff druckbeaufschlagt.

Während dieser zweiten Befüllungsphase wird aus einer Bedruckungsquelle, insbesondere auch aus der Coldbox 200, gasförmiger Wasserstoff bei einem Druck von etwa 18 bar bei einer Temperatur von etwa 38 K über die Zuleitung 120 und das Steuerventil 122 in den Totraum des Tanks 110 geleitet. Bei diesem quasi isenthalpischen Vorgang wird der Flüssigwasserstoff im Tank 110 unterkühlt und auf überkritischen Druck verdichtet, bis der gesamte Tankinhalt als überkritischer Wasserstoff bei gleichmäßig hoher Dichte vorliegt und keinen Phasenübergang mehr zeigt. Insgesamt kann hierdurch die Dichte des Tankinhalts über die Dichte erhöht werden, die mit der ersten Befüllungsphase erreicht werden kann. Zudem wird die Gefahr einer Durchmischung von Gasphase und Flüssigphase ("Sloshing") beseitigt. Nach Beendigung der Befüllung liegt der Speicherbetriebsdruck des Tanks 110 vorzugsweise bei etwa 15 bar. Das Fahrzeug bzw. Schiff 140 kann sich nun in Bewegung setzen, wobei zumindest ein Teil des Antriebs insbesondere über Brennstoffzellen 150 erfolgen kann, die mit Wasserstoff aus dem Tank 110 versorgt werden.

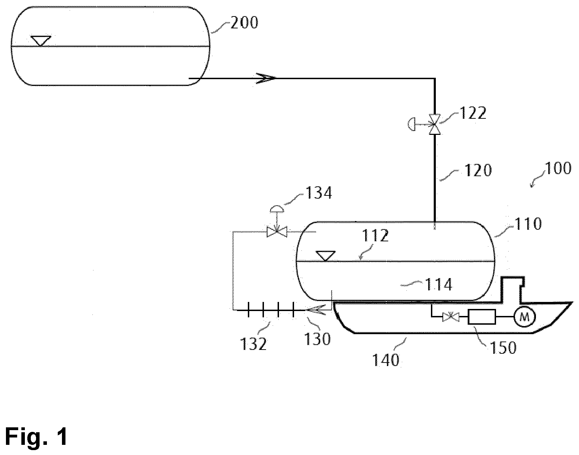

Zur Aufrechterhaltung des Speicherbetriebsdrucks im Tank 110 wird Wasserstoff aus dem Tank 110 über die Rückführleitung 130 entnommen, einem Anwärmer 132 zugeführt und über das Steuerventil 134 dem Tank 110, wie in Figur 1 gezeigt, wieder zurückgeführt. Diese Art der Druckbeaufschlagung trägt allerdings häufig weiterhin das Risiko einer Temperaturschichtung bei ruhiger See und somit von Sloshing bei Seegang.

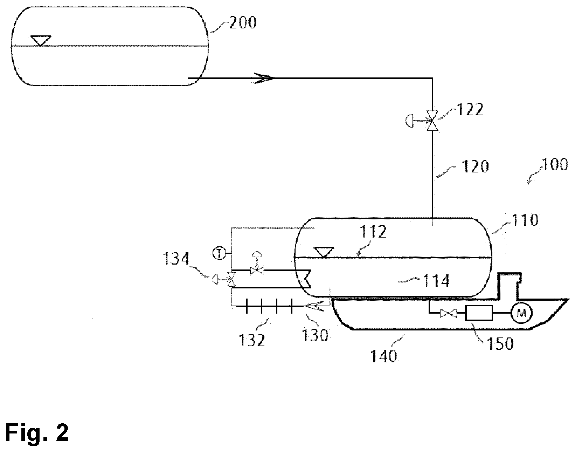

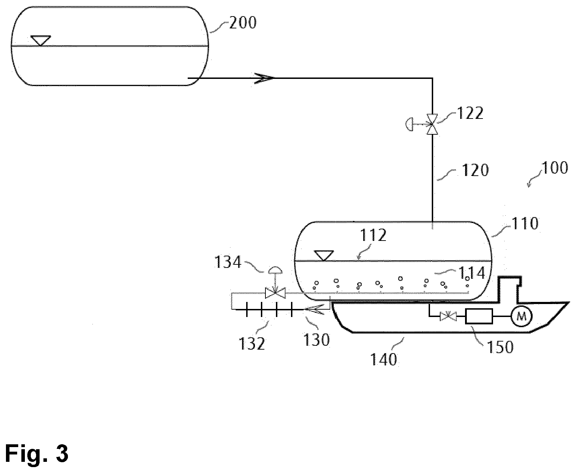

Daher sind in den Figuren 2 und 3 weitere Verbesserungen der Druckbeaufschlagung illustriert. In Figur 2 wird der zur Druckbeaufschlagung dienende Strom abgekühlt, d.h. auf vorzugsweise 30 K bis 50 K temperiert, indem mittels einer Temperaturregelung, die die entsprechenden Steuerventile ansteuert, zumindest ein Teilstrom nach dem Anwärmer 132 durch das Innere des Tanks 110 wärmetauschend geführt wird (insbesondere durch den unteren Teil desselbigen, wenn von einem Flüssigkeitsanteil ausgegangen werden kann). In Figur 3 wird "Warmgas" aus dem Anwärmer 132 in den unteren Teil des Tanks 110 (insbesondere wenn von einem Flüssigkeitsanteil ausgegangen werden kann) über eine entsprechend ausgebildete Leitung eingedüst bzw. "eingesprudelt", also unter Bildung einer Versprudelung eingedüst bzw. eingespritzt. Auch eine Kombination von zwei oder allen drei in den Figuren 1 bis 3 dargestellten Arten der Druckbeaufschlagung kann sinnvoll sein.

### Bezugszeichenliste

- 100: Vorrichtung zur Versorgung mit Wasserstoff
- 110: Tank
- 112: Füllstand
- 114: Flüssigwasserstoff
- 120: Zuleitung
- 122: Steuerventil
- 130: Rückführleitung
- 132: Anwärmer, Heizer
- 134: Steuerventil
- 140: Schiff, Fahrzeug
- 150: Brennstoffzelle
- 200: Coldbox, Vorratstank

## Patentansprüche

1. Verfahren zur Versorgung mit einem kryogenen Gas wie Wasserstoff, bei dem kryogenes Gas in einen Tank (110) gefüllt wird, wobei zum Befüllen des Tanks (110) zunächst verflüssigtes kryogenes Gas bei einem ersten Befüllungsdruck bis zum Erreichen eines ersten Füllstandes (112) in den Tank (110) geleitet wird, und wobei nach Erreichen des ersten Füllstandes (112) gasförmiges kryogenes Gas bei einem zweiten Befüllungsdruck, der mindestens gleich dem kritischen Druck des kryogenen Gases ist, in den Tank geleitet wird, bis der Druck im Tank (110) den kritischen Druck des kryogenen Gases erreicht oder überschreitet.

2. Verfahren nach Anspruch 1, wobei bei Verwendung von Wasserstoff als kryogenem Gas bis zum Erreichen des ersten Füllstandes (112) flüssiger Wasserstoff bei einem ersten Befüllungsdruck von 1 bis 3 bar, insbesondere von 1,5 bar, in den Tank (110) geleitet wird.

3. Verfahren nach Anspruch 1 oder 2, wobei bei Verwendung von Wasserstoff als kryogenem Gas flüssiger Wasserstoff bei dem ersten Befüllungsdruck bei einer Temperatur von 20 bis 25 K in den Tank (110) geleitet wird.

4. Verfahren nach einem der Ansprüche 1 bis 3, wobei der erste Füllstand (112) einem maximalen Füllstand des Tanks (110) bei dem gewählten ersten Befüllungsdruck und einer vorhandenen Tanktemperatur entspricht.

5. Verfahren nach einem der Ansprüche 1 bis 4, wobei das gasförmige kryogene Gas in dem verbliebenen Totraum nach Erreichen des ersten Füllstands (112) geleitet wird.

6. Verfahren nach einem der Ansprüche 1 bis 5, wobei bei Verwendung von Wasserstoff als kryogenem Gas der gasförmige Wasserstoff bei einem zweiten Befüllungsdruck von 15 bis 20 bar, vorzugsweise 18 bar, in den Tank (110) geleitet wird.

7. Verfahren nach einem der Ansprüche 1 bis 6, wobei bei Verwendung von Wasserstoff als kryogenem Gas der gasförmige Wasserstoff bei einer Temperatur von 30 bis 50 K, insbesondere 35 bis 40 K, insbesondere 38 K, in den Tank (110) geleitet wird.

8. Verfahren nach einem der vorangehenden Ansprüche, wobei bei Verwendung von Wasserstoff als kryogenem Gas der Tankdruck nach Befüllung einen Speicherbetriebsdruck zwischen 13 und 20 bar, insbesondere zwischen 13 und 18 bar, insbesondere zwischen 13 und 16 bar, insbesondere von 15 bar, annimmt.

9. Verfahren nach Anspruch 8, wobei der Tank (110) auf dem Speicherbetriebsdruck mittels Rückführung von verdampftem über einen Anwärmer (132) oder eine Heizung geleitetem Wasserstoff gehalten wird, wobei optional der rückgeführte Strom, vorzugsweise auf 30 K bis 50 K, abgekühlt wird, indem zumindest ein Teilstrom des rückgeführten Stroms nach dem Anwärmer (132) durch das Innere des Tanks (110) wärmetauschend geführt wird, und/oder der rückgeführte Strom aus dem Anwärmer (132) in den Tank (110) über eine entsprechend ausgebildete Leitung unter Bildung einer Versprudelung im Tankinneren eingeblasen oder eingedüst wird.

10. Verfahren nach einem der vorangehenden Ansprüche, wobei bei Verwendung von Wasserstoff als kryogenem Gas im Tank (110) gespeicherter Wasserstoff zur Versorgung von Brennstoffzellen (150) mit Wasserstoff aus dem Tank (110) entnommen und der Druck durch Druckminderung auf einen Brennstoffzellen-Betriebsdruck reduziert wird.

11. Verwendung eines Verfahrens nach einem der vorangehenden Ansprüche zur Versorgung mit Wasserstoff, wobei der Tank (110) als Treibstofftank verwendet wird und wobei insbesondere Brennstoffzellen (150) mit dem Wasserstoff versorgt werden.

12. Verwendung nach Anspruch 11, wobei der Treibstofftank (110) auf einem Schiff (140) transportiert wird und die Brennstoffzellen (150) zum Antrieb des Schiffes (140) eingesetzt werden.

13. Vorrichtung umfassend einen kryogenen Gas-Tank (110) und mindestens eine Zuleitung (120) zur Zufuhr von flüssigem und gasförmigem kryogenen Gas in den Tank (110) zur Durchführung eines Verfahrens gemäß einem der Ansprüche 1 bis 10.
